Europäisches Patentamt

(19) European Patent Office

Office européen des brevets

(11) Numéro de publication: **0 136 236**
**B1**

(12) **FASCICULE DE BREVET EUROPEEN**

(45) Date de publication du fascicule du brevet:
**26.08.87**

(21) Numéro de dépôt: **84401870.5**

(22) Date de dépôt: **21.09.84**

(51) Int. Cl.⁴: **G 01 V 1/147,** G 01 V 1/40

(54) Dispositif pour engendrer des impulsions sismiques à l'intérieur d'un forage, par chute d'une masse sur un élément-cible ancré.

(30) Priorité: **22.09.83 FR 8315206**

(43) Date de publication de la demande:
**03.04.85 Bulletin 85/14**

(45) Mention de la délivrance du brevet:
**26.08.87 Bulletin 87/35**

(84) Etats contractants désignés:
**DE GB IT NL**

(56) Documents cités:
**FR - A - 1 493 931**
**FR - A - 1 556 219**
**FR - A - 2 506 464**
**GB - A - 2 129 559**
**US - A - 3 208 548**

(73) Titulaire: **INSTITUT FRANCAIS DU PETROLE, 4, Avenue de Bois-Préau, F-92502 Rueil-Malmaison (FR)**
Titulaire: **COMPAGNIE GENERALE DE GEOPHYSIQUE, 6, rue Galvani B.P. 56, F-91301 Massy Cedex (FR)**

(72) Inventeur: **Dedole, Pascal, 12, bd Léon Louesse, F-92500 Rueil Malmaison (FR)**
Inventeur: **Laurent, Jean, 5, rue du Moulle Morainvilliers, F-78630 Orgeval (FR)**
Inventeur: **Ollivier, Yves, 41, rue des Ecoles, F-91510 Lardy (FR)**

ACTORUM AG

**Description**

La présente invention a pour objet un dispositif pour engendrer des impulsions sismiques à l'intérieur d'un trou ou d'un puits foré dans le sol, et plus particulièrement un dispositif pour engendrer des impulsions par percussion d'une masse sur un élément-cible couplé avec la paroi de ce trou ou de ce puits de forage, utilisable particulièrement dans le domaine de la prospection sismique terrestre.

Parmi les dispositifs adaptés à appliquer des impulsions acoustiques aux parois d'un puits, on peut citer les sources du type «canon à gaz» comportant une enveloppe tubulaire munie d'orifices en communication avec des moyens pour libérer par intermittence un gaz sous très forte pression, ce gaz pouvant être de l'air comprimé ou encore le produit de la combustion d'un mélange détonant. Les impulsions acoustiques sont transmises aux parois du puits par l'eau ou la boue qui y est contenue. De tels dispositifs sont décrits par exemple dans le brevet français 2311322 ou le brevet US 3380551.

Les impulsions sismiques peuvent être engendrées par une brusque éjection d'eau sous pression à l'intérieur d'un puits rempli d'eau, comme le montre le brevet US 4207961.

Parmi les dispositifs adaptés à appliquer des ébranlements sismiques aux parois d'un puits au moyen de percussions, on peut mentionner ceux qui comportent un ou plusieurs éléments, déplaçables par rapport à un corps tubulaire descendu dans le forage à l'extrémité d'un câble, auxquels des moyens moteurs appropriés communiquent des accélérations radiales importantes et qui viennent alors frapper la paroi du puits en engendrant des impulsions transmises aux formations environnantes. Ces moyens moteurs peuvent être par exemple des pistons reliés aux éléments déplaçables et mûs à l'intérieur de chambres de combustion par l'explosion de mélanges détonants. Un tel dispositif est décrit par exemple dans le brevet français 2492111.

On peut également mentionner ceux comportant des pièces de couplage reliées à un corps et qui sont écartées latéralement par rapport à celui-ci de manière à venir s'appliquer contre les parois ou s'y enfoncer. Des masses mobiles déplaçables à l'intérieur du corps sont associées à des moyens moteurs appropriés qui leur communiquent des mouvements rapides. Les forces d'impact lorsque les masses mobiles se heurtent ou viennent frapper une paroi solidaire du corps sont alors mécaniquement transmises aux terrains traversés par le forage par l'intermédiaire des pièces de couplage. Un tel dispositif est par exemple décrit dans le brevet français 2442455.

L'inconvénient des dispositifs à percussion de l'un ou l'autre type mentionné ci-dessus, est que les ébranlements appliqués aux formations géologiques traversées par le puits ont une amplitude assez faible du fait que les pièces mobiles sont relativement petites et légères et possèdent une course relativement courte ou que les moyens moteurs qui peuvent être logés dans un corps cylindrique le plus souvent de faible diamètre ont généralement une puissance limitée.

Le dispositif pour engendrer des impulsions acoustiques dans un puits ou un trou de forage, selon l'invention, comporte un élément-cible, une masse pour frapper l'élément-cible, des moyens de guidage de la chute de la masse vers l'élément-cible et un système de levage pour élever la masse par rapport à l'élément-cible. Ces caractéristiques sont divulguées par exemple dans le document FR-A-2506464. Selon l'invention ce dispositif est caractérisé en ce qu'il comporte un élément de couplage constitué d'une enceinte de volume variable adaptée à être appliquée par dilatation contre la paroi latérale du puits, l'élément-cible étant fixé à ladite enceinte, et des moyens pour gonfler ladite enceinte par intermittence.

Les moyens de gonflage peuvent comporter un circuit hydraulique et un système d'alimentation en eau sous pression.

Le dispositif selon l'invention présente l'avantage que l'énergie acoustique engendrée aux moments des impacts est considérable du fait que la hauteur de la colonne surmontant l'élément-cible, et par conséquent l'énergie cinétique qu'il est possible d'appliquer à l'élément-cible, peuvent être très importantes. Cette énergie acoustique est particulièrement bien transmise aux formations environnantes, du fait du couplage étroit existant entre l'enceinte gonflable supportant l'élément-cible et les parois du puits.

En outre, l'énergie acoustique étant appliquée au sol à une certaine profondeur, de préférence sous la couche de surface dite couche altérée, on évite les réflexions multiples des ondes sismiques sur cette couche qui perturbent les enregistrements effectués à partir des sources sismiques de surface.

D'autres caractéristiques et avantages du dispositif selon l'invention apparaîtront à la lecture de la description d'un mode de réalisation préféré mais non limitatif, et en se référant aux dessins annexés sur lesquels:

— la fig. 1 représente schématiquement le dispositif installé dans un puits et associé à des moyens moteurs disposés en surface;

— la fig. 2 représente schématiquement le dispositif, la masse étant en position basse, en contact de l'élément-cible;

— la fig. 3 représente schématiquement le dispositif, le système de levage étant descendu jusqu'à la masse en contact de l'élément-cible, et

— la fig. 4 représente schématiquement le dispositif, la masse étant amenée en position haute, maintenue par le système de levage.

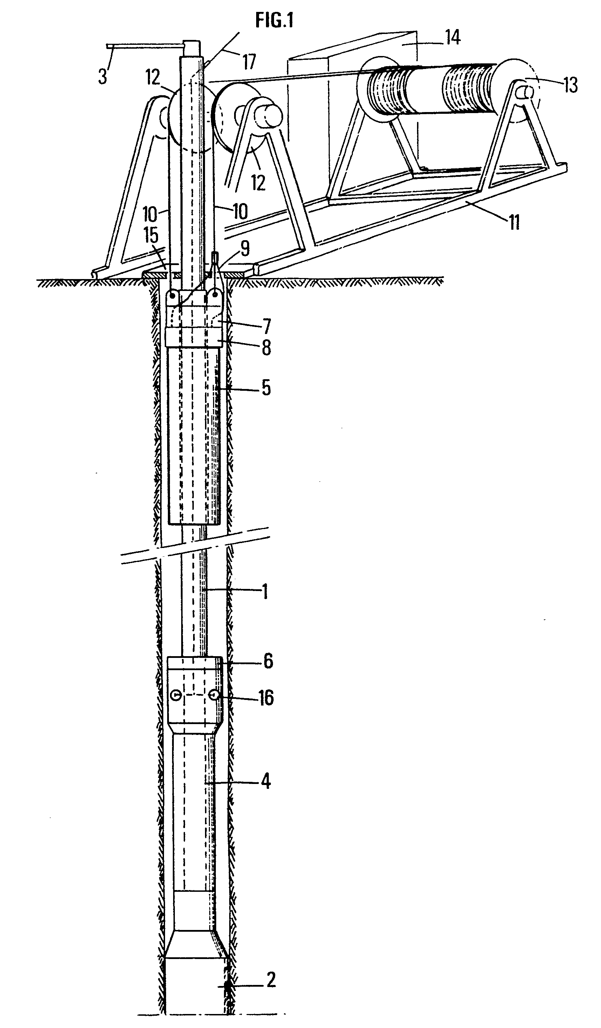

Si l'on reporte à la fig. 1, on voit que le dispositif comporte une colonne tubulaire de guidage 1 solidaire à sa partie inférieure d'un élément de couplage 2 permettant d'ancrer la base de la colonne de guidage contre la paroi d'un puits à un niveau de profondeur choisi. L'élément de couplage est dans ce cas un bloc 2 d'obturation de puits de forage (B.O.P.) communiquant par l'intérieur de la colonne 1 et par un tuyau 3 qui lui est connecté, avec des moyens (non représentés) d'alimentation en eau sous pression. Un élément-cible 4 de diamètre supérieur à celui de la colonne, est fixé à la partie inférieure de celle-ci au-dessus du bloc d'obturation 2. Une masse tubulaire ou marteau 5 est adapté à coulisser librement le long de la colonne de guidage entre une position haute d'où sa chute est déclenchée et une position basse où il vient en contact avec la face supérieure de l'élément-cible 4. Un disque 6 en matériau déformable est fixé contre la face supérieure de l'élément-cible pour éviter la frappe directe entre deux éléments métalliques.

Le dispositif comporte également un système de levage de la masse 5 constitué d'une couronne 7 coulissant le long de la colonne 1 et pourvue à sa base de moyens magnétiques 8 comprenant des aimants permanents dont l'aimantation peut être supprimée par l'application intermittence d'un courant électrique de démagnétisation. Ce courant leur est appliqué au moyen de conducteurs électriques 9. Ces conducteurs sont associés à des câbles de traction 10 qui sont fixés à la partie supérieure de la couronne 7. Les câbles de traction sont connectés à un système de levage disposé en surface et comportant un châssis 11 supportant des poulies de renvoi 12 et un treuil 13 associé à des moyens moteurs 14 constitués d'un moteur couplé à un réducteur. Les câbles 10 s'appuient sur les poulies de renvoi 12 et viennent s'enrouler sur le treuil 13. Une plaque de centrage 15 est disposée par exemple à l'orifice du puits pour maintenir la colonne de guidage 1 dans l'axe de celui-ci et faciliter le libre coulissement du marteau 5 entre sa position haute et sa position basse.

Le dispositif peut comporter également des moyens détecteurs de chocs 16 disposés dans des logements appropriés de l'élément-cible 4. Ces moyens constitués par exemple de relais à lames du type Reed sont reliés à un système de commande et d'enregistrement (non représenté) disposé en surface, par des conducteurs électriques 17 passant dans le conduit central de la colonne de guidage 1, et délivrant à l'instant de l'impact du marteau 5 sur l'élément-cible un signal-repère définissant un instant initial de référence sur les enregistrements des signaux engendrés par des géophones en réponse aux échos sur des couches souterraines des impulsions acoustiques émises.

Selon la puissance acoustique requise, on fait varier l'importance de la masse 5 et sa hauteur de chute. A titre d'exemple, la masse peut être choisie entre 5 kg et 40 kg et la hauteur de chute entre 5 mètres et 20 mètres.

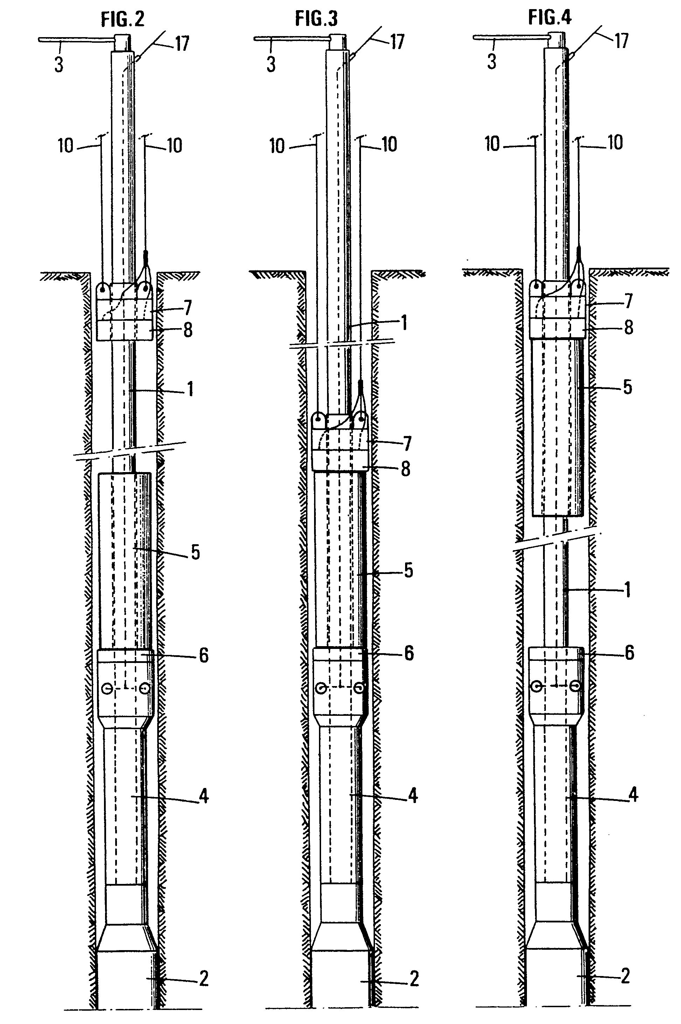

Le dispositif fonctionne de la manière suivante:
– la colonne 1 ayant été descendue à l'intérieur du puits et convenablement centrée, est couplée avec la paroi du puits par gonflement du bloc d'obturation 2 depuis l'installation de surface au moyen d'eau sous pression. Le marteau 5 est en position basse en contact avec l'élément-cible (fig. 2);
– on actionne le treuil 12 (fig. 1) de manière à dérouler les câbles 10 et faire descendre le long de la colonne 1 la couronne 7, jusqu'à ce que les aimants 8 qui y sont fixés viennent se plaquer contre la paroi supérieure du marteau (fig. 3);
– on actionne ensuite le treuil en sens inverse pour remonter la couronne 7 et le marteau qui lui est alors assujetti, jusqu'à la position haute choisie (fig. 4); et enfin,
– on applique aux aimants 8 un courant de démagnétisation. Le marteau est libéré et après une chute guidée par la colonne 1, vient frapper l'élément-cible (fig. 1) et engendrer des impulsions acoustiques qui sont transmises aux formations environnantes par l'intermédiaire du bloc d'obturation 2.

On ne sortirait pas du cadre de l'invention en remplaçant les aimants permanents 8 par des électro-aimants ou par tout moyen équivalent assurant par intermittence le maintien du marteau contre la couronne 7.

De la même façon, le bloc d'obturation 2 assurant le couplage de l'élément-cible à la paroi du puits pourra être remplacé par tout élément pourvu de surfaces de couplage adaptées à être appliquées par intermittence contre la paroi du puits.

## Revendications

1. Dispositif pour engendrer des impulsions acoustiques dans un puits ou un trou de forage, comportant un élément-cible (4), une masse (5) pour frapper l'élément-cible (4), des moyens de guidage de la chute de la masse (5) vers l'élément-cible (4) et un système de levage pour élever la masse (5) par rapport à l'élément-cible (4), caractérisé en ce qu'il comporte un élément de couplage constitué d'une enceinte (2) de volume variable adaptée à être appliquée par dilatation contre la paroi latérale du puits, l'élément-cible (4) étant fixé à ladite enceinte (2), et des moyens pour gonfler ladite enceinte (2) par intermittence.

2. Dispositif selon la revendication 1, caractérisé en ce que les moyens de gonflage comportent un circuit hydraulique et un système d'alimentation en eau sous pression.

3. Dispositif selon la revendication 2, caractérisé en ce que les moyens de guidage de la chute de la masse comportent une colonne tubulaire (1), le système d'alimentation en eau sous pression étant en communication avec ladite enceinte (2) par l'intermédiaire de ladite colonne tubulaire (1).

4. Dispositif selon la revendication 1, caractérisé en ce que le système de levage comporte des moyens magnétiques (8) fixés à des câbles reliés à un treuil (13, 14), ces moyens magnétiques (8) pouvant être solidarisés par intermittence avec ladite masse (5).

5. Dispositif selon la revendication 1, caractérisé en ce qu'il comporte des moyens (16) pour engendrer un signal électrique à l'instant du choc de la masse (5) contre l'élément-cible (4).

## Patentansprüche

1. Vorrichtung zur Erzeugung von Schallimpulsen in einem Schacht oder einem Bohrloch, mit einem Targetelement (4), einer Masse (5), die auf das Targetelement (4) schlägt, Einrichtungen zum Führen der Masse (5) in ihrem Fall gegen das Targetelement (4) und einem Hubsystem, um die Masse (5) bezüglich des Targetelements (4) zu heben, gekennzeichnet durch ein Kopplungselement, bestehend aus einer Kammer (2) variablen Volumens, derartiger Auslegung, dass es durch Ausdehnung bzw. Dilatation gegen die Seitenwandung des Bohrlochs gepresst wird, wobei das Targetelement (4) an dieser Kammer (2) befestigt ist; sowie durch Einrichtungen, welche intermittierend diese Kammer (2) aufblähen.

2. Vorrichtung nach Anspruch 1, dadurch gekennzeichnet, dass die Aufbläheinrichtungen einen hydraulischen Kreis und ein Druckwasserspeisesystem umfassen.

3. Vorrichtung nach Anspruch 2, dadurch gekennzeichnet, dass die Einrichtungen zum Führen des Falls der Masse eine röhrenförmige Kolonne (1) umfassen, wobei das Druckwasserspeisesystem in Verbindung mit dieser Kammer (2) über diese röhrenförmige Kolonne (1) steht.

4. Vorrichtung nach Anspruch 1, dadurch gekennzeichnet, dass das Hubsystem Magnetausbildungen (8) umfasst, die an Seilen oder Kabeln mit einer Winde (13, 14) befestigt sind, wobei die magnetischen Einrichtungen (8) intermittierend an dieser Masse (5) befestigt sind.

5. Vorrichtung nach Anspruch 1, gekennzeichnet durch Einrichtungen (16), die ein elektrisches Signal im Augenblick des Stosses der Masse (5) gegen das Targetelement (4) erzeugen.

–

## Claims

1. Device for generating acoustic pulses in a well or bore-hole, including a target element (4), a mass (5) for striking the target element, means for guiding the fall of the mass (5) towards the target element (4) and a lifting system for raising the mass (5) with respect to the target element (4), characterized in that it includes a coupling element formed of a variable volume enclosure (2) adapted to be applied by expansion against the sidewall of the well, the target element (4) being fixed to said enclosure (2), and means for inflating said enclosure (2) intermittently.

2. Device according to claim 1, characterized in that the inflation means include a hydraulic circuit and a pressurized water supply system.

3. Device according to claim 2, characterized in that the means for guiding the fall of the mass include a tubular stringer (1), the pressurized water supply system being in communication with said enclosure (2) through said tubular stringer (1).

4. Device according to claim 1, characterized in that the lifting system includes magnetic means (8) fixed to cables connected to a winch (13, 14), these magnetic means (8) being intermittently interlockable with said mass (5).

5. Device according to claim 1, characterized in that it includes means (16) for generating an electric signal at the time of the shock of the mass (5) against the target element (4).

0136236

**FIG.1**

0136236

FIG.2    FIG.3    FIG.4

7